# EUROPEAN PATENT SPECIFICATION

(11) **EP 0 982 510 B1**
(45) Date of publication and mention of the grant of the patent: **10.08.2005**
(21) Application number: 99830408.3
(22) Date of filing: 25.06.1999
(51) Int. Cl.: F16D 13/58, F16D 13/46, B60K 17/02

(54) **System for controlling a friction coupling for motor-vehicles**
System zur Steuerung einer Reibungskupplung für Kraftfahrzeuge
Système de commande d'un embrayage à friction pour véhicules automobiles

(30) Priority: 02.07.1998 IT TO980578
(43) Date of publication of application: 01.03.2000
(73) Proprietor: C.R.F. Società Consortile per Azioni, 10043 Orbassano (Torino) (IT)
(72) Inventor: Mesiti, Domenico, 10043 Orbassano (Torino) (IT); Caenazzo, Dario, 10043 Orbassano (Torino) (IT); Garabello, Marco, 10043 Orbassano (Torino) (IT)
(74) Representative: Notaro, Giancarlo

(56) References cited:
- WO-A-97/28382
- FR-A- 2 581 432
- US-A- 5 715 921

## Description

The present invention relates to a system for controlling a friction coupling or clutch for motor-vehicles.

In recent years, electrical-hydraulical powered control devices have been increasingly used for actuating various elements of the vehicle transmission, in order to obtain improved comfort for the user and better performances for the motor-vehicle. The various powered control devices are controlled by an electronic control unit on the basis of electric signals coming from sensors interpreting the requests from the user. With particular reference to the actuation of the transmission friction coupling, the electronic control unit causes opening of a solenoid valve which controls fluid supply to hydraulic means controlling displacement of a friction coupling actuating member, in order to cause disengagement of the latter. In the case to which the present invention is specifically related, the friction coupling is of the type comprising a driving disk which is to be rotated by the motor-vehicle engine, a driven shaft which is the primary shaft of the vehicle gearbox and a friction disk connected in rotation to the driven shaft and pressed axially against the driving disk by a Belleville-type spring which is swingably supported by the driving disk at an intermediate diameter thereof, this spring pressing the friction disk at an outer diameter thereof and being subjected to the action of an axially movable actuating member at an inner diameter thereof.

In the known solutions, the hydraulic means controlling the actuating member include a master cylinder which is supplied with fluid under pressure through the above mentioned control solenoid valve which is a flow proportional solenoid valve (i.e. a valve able to obtain a variation of the fluid flow following a variation of the electric current supplied thereto), the above mentioned master cylinder transmitting a displacement to the piston which causes movement of the friction coupling actuating member by means of a mechanical transmission. The above described known arrangement is relatively complicated and costly. Moreover it is further complicated by that the master cylinder must be associated with a position sensor which enables the friction coupling to be controlled knowing at each time the position of the coupling actuating member. Obviously, this position sensor implies an additional cost and, because of its bulk and its operating limits, it renders difficult to adopt simpler arrangements, such as an arrangement of the control hydraulic cylinder directly inside the housing of the friction coupling.

On the other hand, in the known solutions, the use of the position sensor is unavoidable. This is due to that the spring which is typically used in the friction couplings of the above indicated type has a load/displacement characteristic such that each value of the load applied to the spring may correspond to more than one value of the displacement. Therefore, with the springs adopted in the known solutions it is not possible to control the actuation of the friction coupling on the basis of the load applied to the actuating member and it is instead necessary to control the friction coupling on the basis of signals generated by a position sensor with the resulting complications and disadvantages in terms of cost which have been mentioned above.

The object of the present invention is that of overcoming the above mentioned drawbacks, by providing a clutch control system which is simpler, less bulky and less costly as the known systems.

According to the invention, the above mentioned object is achieved by an assembly comprising a motor-vehicle friction coupling and a control system therefor, having the features indicated in claim 1.

According to a further feature, the above mentioned solenoid valve is a pressure proportional solenoid valve (i.e. a valve adapted to provide a controlled pressure which varies as a function of the supplied electric current).
Thus, the system according to the invention is greatly simplified, less bulky and less costly with respect to the known systems. In particular, as already indicated in the foregoing, the system according to the invention does not require the use of a position sensor, with the resulting advantages in terms of lower bulk and lower cost. The lack of the position sensor simplifies the provision of the control hydraulic means, which can be simply constituted by a hydraulic cylinder arranged inside the housing of the friction coupling, coaxially with the driven shaft, with the piston of the cylinder directly constituting the actuating member of the coupling.

With the arrangement according to the invention, the torque transmitted by the friction coupling is linearly related to the load applied to the actuating member and hence to the pressure provided by the solenoid valve. Therefore, the coupling can be controlled in an extremely simple manner.

Further features and advantages of the invention will become apparent from the description which follows with reference to the annexed drawings, given purely by way of non limiting example, in which:
figure **1** shows a diagram of a preferred embodiment of the system according to the invention,
figure **2** is a cross-sectional view at an enlarged scale of a detail of figure 1,
figure **3** is a diagram which shows the characteristic of the spring forming part of the system according to the invention,
figure **4** is a diagram which shows the characteristic of the spring used in a system according to the prior art, and
figure **5** is a diagram showing the adjustment characteristic of the system according to the invention.

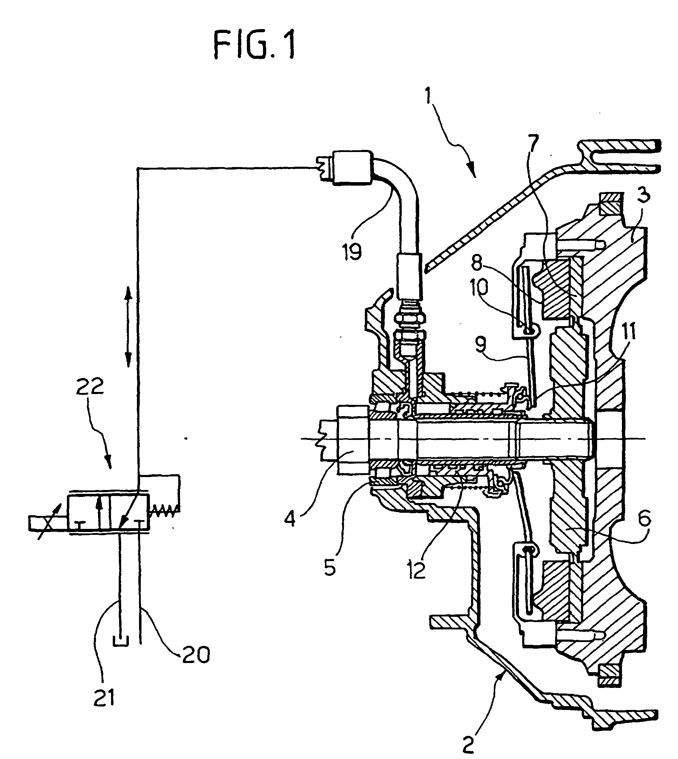

In figure 1, reference numeral 1 generally designates a motor-vehicle friction coupling, comprising a housing 2, a driving disk 3 typically constituted by the engine flywheel, rigidly connected to the engine shaft (not shown) and rotating therewith, as well as a driven shaft 4 rotatably mounted within housing 2 by means of a bearing 5 and constituting the primary shaft of the motor-vehicle gearbox. According to the prior art, connected in rotation with the driven shaft 4 there is mounted a friction disk 6 provided at its periphery with two friction pads 7 and pressed against the driving disk 3, through a disk-pushing ring 8, by a Belleville type spring 9. In figure 1, the portions above and below the axis of shaft 4 have been shown respectively in the work condition and in the rest condition of spring 9. Spring 9 is swingably supported at 10 by the driving disk 3 at an intermediate diameter thereof. The spring is adapted to press the disk pushing ring 8 (see lower portion of figure 1) in proximity of an outer diameter thereof, whereas it is subjected to the action of an actuating member 12 at 11, at an inner diameter thereof.

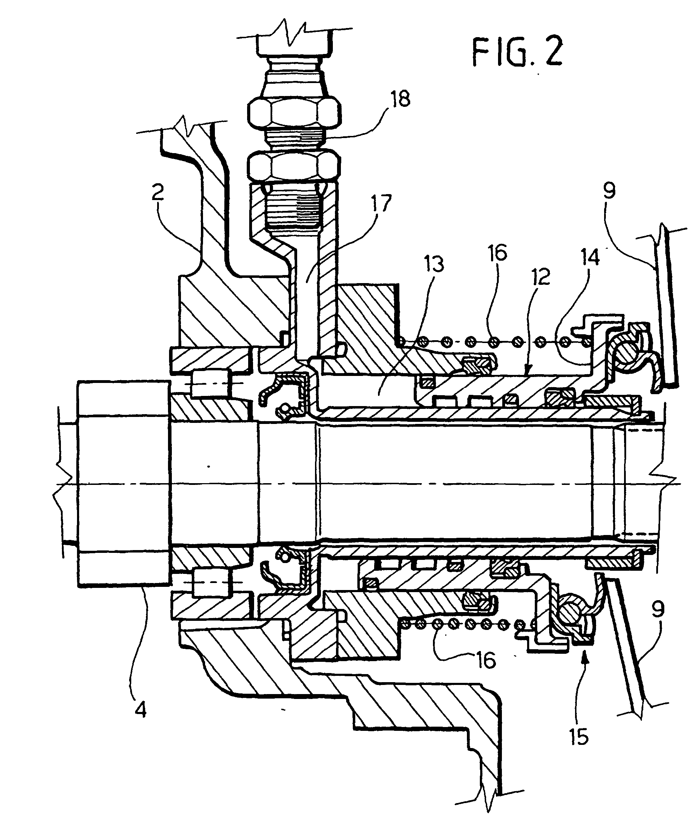

As clearly shown in figure 2, the actuating member 12 is constituted by the piston of a hydraulic cylinder which is arranged directly inside the housing 2 of the friction coupling 1, coaxially with the driven shaft 4. More precisely, the housing 2 of the friction coupling defines a cylindrical chamber 13 within which there is slidably mounted the cylindrical body of the piston 12. The latter ends with an annular flange 14 which presses against the inner diameter of the Belleville-type spring 9 by means of a thrust ball bearing 15. In the rest condition (lower portion of figure 2) a spring 16 applies a weak load which holds piston 12 against the thrust ball bearing 15 and the spring 9.

The pressure chamber 13 of the hydraulic cylinder integrated within the friction coupling communicates through a conduit 17 with a connecting element 18 for connection to a conduit 19 which receives fluid under pressure. The conduit 19 can be connected selectively to a line 20 connected to a supply pump, or a line 21 connected to a discharge reservoir, by means of a proportional type solenoid valve 22 adapted to supply a controlled pressure variable as a function of the supplied electric current.

In the rest condition of the system, spring 9 is in the position illustrated in the lower portion of figures 1, 2. In this condition, the spring pushes the friction disk 7 against the driving disk 3 which thus causes rotation of the driven shaft 4. In order to cause disengagement of the coupling, fluid under pressure is supplied within chamber 13 of the hydraulic cylinder, so as to cause an axial movement (rightwardly with reference to the drawing) of the actuating member constituted by the piston 12, which is thus brought to the position shown in the upper portion of figures 1, 2. In this condition, spring 9 does not push any longer against the friction disk 7, so that transmission of the torque from disk 3 to shaft 4 is interrupted.

As already indicated, the solenoid valve 22 is to be controlled by an electronic control unit in order to satisfy the user's requirements. Naturally, since the driver does not control the friction coupling manually and directly, it is necessary to ensure that the pressure fed to the actuator is automatically adjusted in the best way, without causing abrupt disengagement or engagement of the coupling.

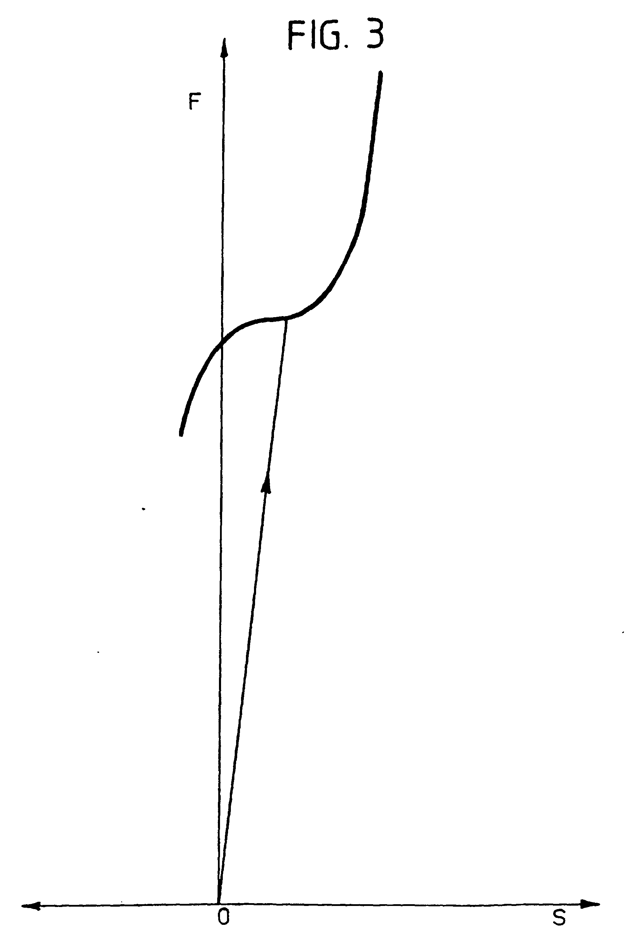

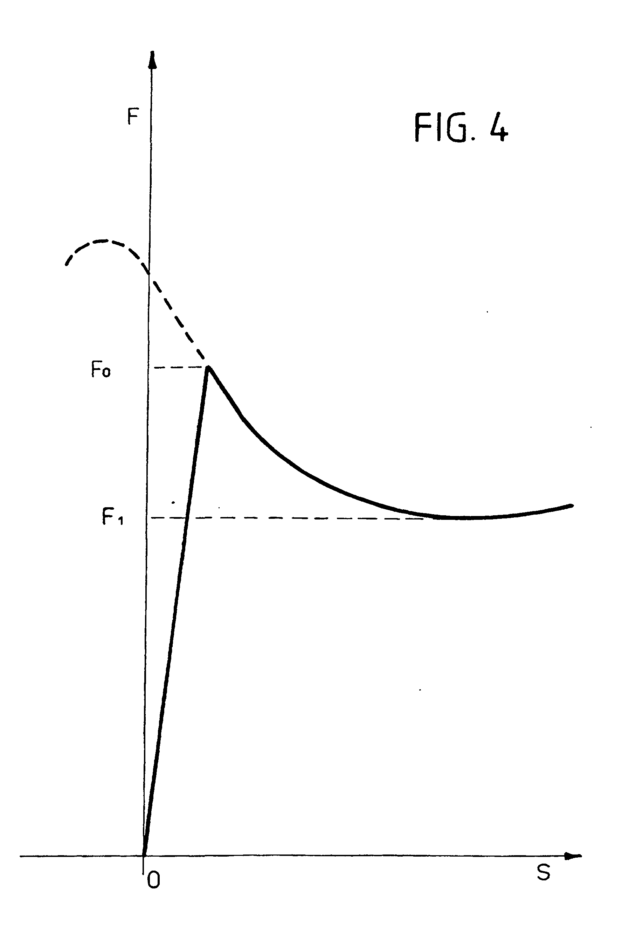

As also already indicated, in the electrical-hydraulical actuating systems which have been made heretofore, in order to obtain this result it is necessary to make use of a sensor for sensing the position of the actuating member, so that an automatic control system for the coupling can be provided which is free of inconveniences. The need for the position sensor comes from that the spring used in the known systems has a load/displacement (F/S) characteristic of the type shown in figure 4 of the annexed drawings, with a peak at a load F₀. With a spring of this type, when the load increases from 0 up to F₀, the spring deforms, whereupon the spring moves abruptly towards its end fully deformed position once the applied load becomes greater than the value F₀. When afterwards the load is lowered, the spring remains in its end position until the load becomes lower than the minimum value F₁ shown in the diagram. With the springs used in the prior art, therefore, each given value of the load applied to the spring does not correspond to a determined position of the spring. Just for this reason, in the electrical-hydraulical systems which are presently used, in order to ensure a proper operation of the coupling, the control function is carried out on the basis of signals provided by a position sensor which is associated with the control hydraulic cylinder. As also already indicated, however, the position sensor implies a non negligible cost and a bulk which render difficult to adopt a simplified solution as that which has been adopted instead in the system according to the invention, in which the hydraulic control cylinder is integrated within the friction coupling, coaxially with the axis of the driven shaft, with the piston of the cylinder which directly forms the spring actuating member. This simplification is possible in the case of the present invention due to that it makes use of a Belleville-type spring which has a load/displacement (F/S) characteristic which is a monotonic increasing function, as shown in figure 3. This result is achieved by adopting a spring which has a ratio h/t ≤ 1.4, where h is the axial dimension of the spring in the undeformed condition and t is the thickness of the plate forming the spring.

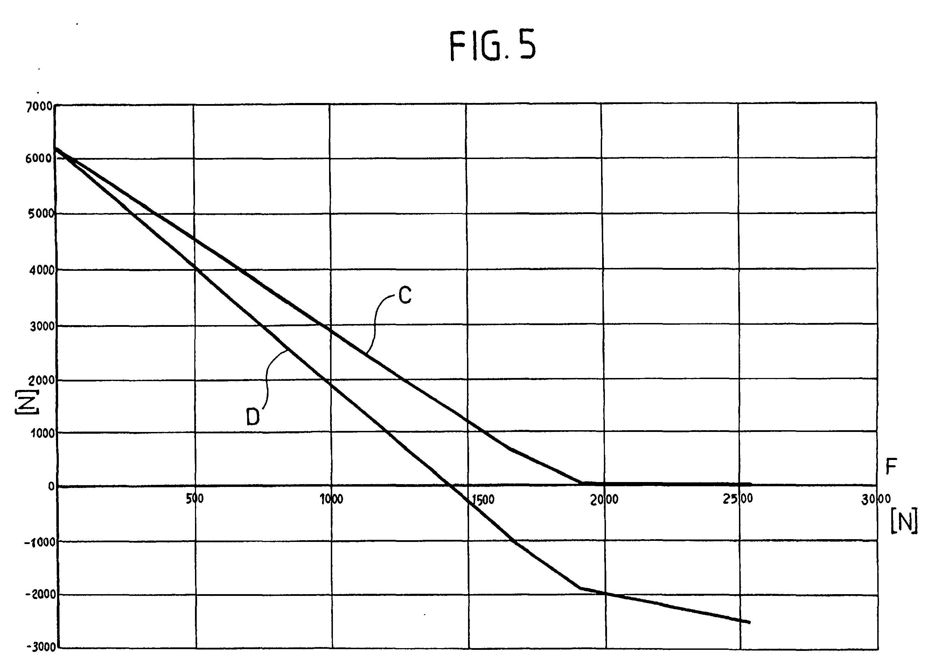

Due to the adoption of a spring having a characteristic of the type illustrated in figure 3, in the system according to the invention each value of the load applied to the spring corresponds to a single position of the spring. It is thus possible to control the actuating member with no need to check the position of the actuating member at every moment, but simply by controlling the load applied to the spring, i.e. the pressure fed to the control hydraulic cylinder. This result can be advantageously obtained with the use of the pressure proportional solenoid valve 22. Furthermore, the control of the torque transmitted by the coupling in the system according to the invention is further simplified because this torque is linearly related to the load applied to the actuating member 12, and hence is related to the supplied pressure. This is clearly apparent from figure 5, which shows a diagram of the variation of the load C applied by spring 9 to the disk pushing ring 8 (this load being linearly proportional to the transmitted torque) versus the variation of the load F applied by the actuating member 12 to spring 9. As shown, the variation of load C is linear.

Figure 5 shows also the variation of load D at the fulcrum 10 of spring 9, versus the variation of the load F applied by the actuating member 12.

As clearly apparent from the foregoing description, the system according to the invention is characterized by a greater simplicity, a lower cost and a lower bulk with respect to the systems of the same type made heretofore.
Naturally, while the principle of the invention remains the same, the details of construction and the embodiments may widely vary with respect to what has been described and illustrated purely by way of example, without departing from the scope of the present invention.

## Claims

1. An assembly comprising a motor-vehicle friction coupling and a control system therefor, wherein the friction coupling is of the type comprising a driving disk (3) which is to be rotated by the motor-vehicle engine, a driven shaft (4) constituting the primary shaft of the motor-vehicle gearbox, and a friction disk (6) connected in rotation to the driven shaft (4) and pressed axially against the driving disk (3) by a Belleville-type spring (9) which is swingably supported by the driving disk (3) at an intermediate diameter thereof, this spring (9) pushing the friction disk (6) in proximity of an outer diameter thereof and being subjected to the action of an actuating member (12), which is movable axially, at an inner diameter thereof, and further wherein hydraulic means are provided for controlling said actuating member (12), and further comprising a solenoid valve (22) for controlling the supply to said hydraulic means,
**characterized in that** said Belleville-type spring (9) is shaped in such a way as to have a load/displacement characteristic (F/S) which is a monotonic increasing function, so that the actuating member (12) can be controlled on the basis of the load applied thereto, with no need of providing means for sensing the position of said actuating member, since each value of the load (F) applied by the actuating member (12), and hence each value of the pressure fed to said hydraulic means, corresponds to a single determined position of the actuating member (12) and **in that** said control hydraulic means are constituted by a hydraulic cylinder which is arranged inside the housing (2) of the friction coupling (1), coaxially with the driven shaft (4), this cylinder having a piston (12) forming said actuating member.

2. Assembly according to claim 1, **characterized in that** said solenoid valve (22) is a pressure proportional solenoid valve.

3. Assembly according to claim 1, **characterized in that** the Belleville-type spring (9) has a ratio h/t ≤ 1.4, where h is the axial dimension of the spring in the undeformed condition and t is the thickness of the plate forming the spring.

## Patentansprüche

1. Anordnung aufweisend eine Kraftfahrzeug-Reibungskupplung und ein Kontrollsystem dafür, wobei die Reibungskupplung von der Art ist, welche eine Schwungscheibe (3), welche vom Kraftfahrzeugmotor zu drehen ist, eine Abtriebswelle (4), welche die Eingangswelle des Kraftfahrzeuggetriebes bildet, und eine Reibscheibe (6), welche in Drehung mit der Abtriebswelle (4) verbunden und axial von einer Tellerfeder (9), welche beweglich auf einem mittleren Durchmesser dieser Feder (9) an der Schwungscheibe (3) gehaltert ist, gegen die Schwungscheibe (3) gedrückt wird, aufweist, wobei diese Feder (9) die Reibscheibe (6) in der Nähe eines äußeren Durchmessers der Feder (9) schiebt und an einem inneren Durchmesser der Feder (9) der Einwirkung eines Betätigungsglieds (12) unterworfen ist, welches axial beweglich ist, und wobei ferner hydraulische Mittel zum Steuern des Betätigungsglieds (12) vorgesehen sind, und welche ferner ein Magnetventil (22) zum Steuern der Versorgung der hydraulischen Mittel aufweist,
**dadurch gekennzeichnet, daß** die Tellerfeder (9) derart geformt ist, daß sie eine Last/Auslenkungs-Charakteristik (F/S) besitzt, welche eine monoton steigende Funktion ist, so daß das Betätigungsglied (12) auf Grundlage der darauf ausgeübten Last gesteuert werden kann ohne Notwendigkeit, Mittel zum Erfassen der Position des Betätigungsglieds (12) vorzusehen, da jeder Wert der von dem Betätigungsglied (12) ausgeübten Last (F), und somit jeder Wert des Drucks, mit welchem die hydraulischen Mittel beaufschlagt werden, zu einer einzelnen bestimmten Position des Betätigungsglieds gehört, und daß die hydraulischen Mittel aus einem Hydraulikzylinder bestehen, welcher koaxial mit der Abtriebswelle (4) im Gehäuse (2) der Reibungskupplung (1) angeordnet ist, wobei dieser Zylinder einen Kolben (12) besitzt, welcher das Betätigungsglied 12 bildet.

2. Anordnung gemäß Anspruch 1, **dadurch gekennzeichnet, daß** das Magnetventil (22) ein druckproportionales Magnetventil ist.

3. Anordnung gemäß Anspruch 1, **dadurch gekennzeichnet, daß** die Tellerfeder (9) ein Verhältnis h/t ≤ 1,4 besitzt, worin h die axiale Abmessung der Feder (9) in undeformiertem Zustand, und t die Dicke der Platte, welche die Feder (9) bildet, ist.

## Revendications

1. Ensemble comportant un accouplement à friction de véhicule à moteur et un système de commande pour celui-ci, l'accouplement à friction étant du type comportant un disque d'entraînement (3) qui doit être entraîné en rotation par le moteur de véhicule à moteur, un arbre entraîné (4) constituant l'arbre principal de la boîte de vitesses de véhicule à moteur, et un disque de friction (6) relié en rotation à l'arbre entraîné (4) et pressé axialement contre le disque d'entraînement (3) par un ressort du type Belleville (9) qui est supporté de façon oscillante par le disque d'entraînement (3) au niveau d'un diamètre intermédiaire de celui-ci, ce ressort (9) poussant le disque de friction (6) à proximité d'un diamètre extérieur de celui-ci et étant soumis à l'action d'un élément d'actionnement (12), qui est mobile axialement, au niveau d'un diamètre interne de celui-ci, et des moyens hydrauliques étant en outre prévus pour commander ledit élément d'actionnement (12), et comportant en outre une électrovanne (22) afin de commander l'alimentation desdits moyens hydrauliques,
**caractérisé en ce que** ledit ressort du type Belleville (9) est conformé de manière à avoir une caractéristique charge/déplacement (F/S) qui est une fonction à croissance monotone, de telle sorte que l'élément d'actionnement (12) peut être commandé sur la base de la charge appliquée dessus, sans la nécessité de prévoir des moyens destinés à détecter la position dudit élément d'actionnement, puisque chaque valeur de la charge (F) appliquée par l'élément d'actionnement (12), et donc chaque valeur de la pression délivrée aux dits moyens hydrauliques, correspond à une unique position prédéterminée de l'élément d'actionnement (12) et **en ce que** lesdits moyens hydrauliques de commande sont constitués par un cylindre hydraulique qui est disposé à l'intérieur du boîtier (2) de l'accouplement à friction (1), coaxialement à l'arbre entraîné (4), ce cylindre ayant un piston (12) formant ledit élément d'actionnement.

2. Ensemble selon la revendication 1, **caractérisé en ce que** ladite électrovanne (22) est une électrovanne proportionnelle à la pression.

3. Ensemble selon la revendication 1, **caractérisé en ce que** le ressort du type Belleville (9) a un rapport h/t ≤ 1,4, où h est la dimension axiale du ressort dans la condition non déformée et t est l'épaisseur de la plaque formant le ressort.
